**Europäisches Patentamt**

**European Patent Office**

**Office européen des brevets**

(19)

(11) Veröffentlichungsnummer: **0 050 700**
**B1**

# EUROPÄISCHE PATENTSCHRIFT

(12)

(45) Veröffentlichungstag der Patentschrift:
25.01.84

(51) Int. Cl.³: **C 09 K 3/18**

(21) Anmeldenummer: **81100663.4**

(22) Anmeldetag: **30.01.81**

(54) Enteisungs- und Vereisungsschutzmittel.

(30) Priorität: **25.10.80 DE 3040376**

(43) Veröffentlichungstag der Anmeldung:
**05.05.82 Patentblatt 82/18**

(45) Bekanntmachung des Hinweises auf die Patenterteilung:
**25.01.84 Patentblatt 84/4**

(84) Benannte Vertragsstaaten:
**AT BE CH DE FR GB IT LI NL SE**

(56) Entgegenhaltungen:
DE - A - 1 928 409
DE - A - 1 940 825
DE - B - 2 407 123
GB - A - 1 272 464
GB - A - 2 001 095
US - A - 1 394 774

(73) Patentinhaber: **HOECHST AKTIENGESELLSCHAFT,**
**Postfach 80 03 20, D-6230 Frankfurt am Main 80 (DE)**

(72) Erfinder: **König-Lumer, Inge, Luitpoldallee 13,**
**D-8260 Mühldorf (DE)**
Erfinder: **Schwenk, Ulrich, Dr., Robert-Koch-Strasse 209,**
**D-8263 Burghausen/Salzach (DE)**
Erfinder: **Salvador, René, Dr., Hillmannstrasse 19,**
**D-8262 Altötting (DE)**
Erfinder: **Kapfinger, Josef, Kastenstrasse 7,**
**D-8261 Burgkirchen/Alz (DE)**

ACTORUM AG

Enteisungs- und Vereisungsschutzmittel

Die Erfindung betrifft ein flüssiges Enteisungs- und Vereisungsschutzmittel, um insbesondere Flugzeugoberflächen von Eis, Reif und/oder Schnee zu befreien und sie gegen Wiederbefall zu schützen.

In den kalten Jahreszeiten bilden sich, insbesondere bei relativ hoher Luftfeuchtigkeit, bei Regen und/oder Schneefall, Ablagerungen (Schichten) von Eis, Reif und/oder mehr oder weniger festhaftendem Schnee. Der Hauptnachteil solcher Ablagerungen auf Flugzeugen liegt darin, dass das Funktionieren bestimmter Teile des Flugzeuges ausgeschaltet werden kann und die normalen aerodynamischen Verhältnisse verändert werden.

Es ist deshalb schon seit langem bekannt, Flugzeugoberflächen mit Hilfe von Auftauflüssigkeiten auf der Basis von üblichen Frostschutzmitteln, vorzugsweise Glykolen und Glycerin, von Eis und gegebenenfalls Reif oder Schnee zu befreien und auch zu erreichen, dass eine neurliche Eis-, Schnee- oder Reifbildung für einen möglichst langen Zeitraum verhindert wird.

Die derzeitigen Forderungen an ein gutes Enteisungs- und Vereisungsschutzmittel sind sehr vielseitig. Unter den wichtigsten sind insbesondere zu nennen: leichte Aufbringbarkeit auf die zu befreienden und konservierenden Flächen mittels der üblichen Sprühgeräte; keine nennenswerte Korrosionswirkung, insbesondere gegenüber Metallen, wie Aluminium, Buntmetalle und Stahl und gegenüber Glas und Acrylglas; schnelle und vollständige Auftauung von Eis, Schnee und Reif; Bildung eines zusammenhängenden Flüssigkeitsfilms mach dem Aufbringen auf die entsprechenden Flächen, auch wenn diese nicht waagrecht sind; hohe Scherstabilität; optimale Viskosität; und langanhaltende Schutzwirkung gegen eine neuerliche Bildung von Eis, Reif und/oder Schnee, das heisst, das aufgebrachte flüssige Mittel soll langanhaltende konservierende Wirkung besitzen (dies wird ausgedrückt durch die sogenannte holdover-Zeit).

Die bekannten Enteisungs- und Vereisungsschutzmittel erfüllen diese Forderungen nur teilweise. Sie lassen insbesondere hinsichtlich Scherstabilität, optimaler Viskosität, optimalen rheologischen Verhaltens und hinsichtlich holdover-Zeit zu wünschen übrig. Eine hohe Scherstabilität und ein optimales rheologisches Verhalten sind deshalb von Bedeutung, weil sie die Voraussetzung für eine problemlose Handhabung und Versprühung der Enteisungsflüssigkeit sind. Beide gewährleisten nämlich auch bei Einwirkungen, wie Rühren bei hohen Tourenzahlen, Pumpen und dergleichen die Beibehaltung der erforderlichen Viskosität, ein laminares Fliessverhalten der Flüssigkeit auch bei hohem Schergefälle und schliessen das Auftreten von Turbulenzen aus, was sowohl für das Aufsprühen der Flüssigkeit als auch für das problemlose Abfliessen, insbesondere von Flugzeug-Tragflächen während des Starts, unbedingt erforderlich ist.

Die Viskosität eines guten Enteisungs- und Vereisungsschutzmittels ist dann optimal, wenn sie bei 20°C etwa 100 bis 1000 mm²/s, vorzugsweise bei etwa 200 bis 800 mm²/s liegt, und bei –10°C bei etwa 1000 bis 4000 mm²/s, vorzugsweise bei etwa 1500 bis 3000 mm²/s.

Nur mit einer relativ langen holdover-Zeit ist kein oder kein nennenswerter Wiederbefall der Metallfläche mit Eis, Schnee und/oder Reif für einen längeren Zeitraum gewährleistet.

In der US-Patentschrift 2 373 727 aus dem Jahre 1945 ist ein Mittel zur Verhinderung der Bildung und Anhäufung von Eis an Flugzeugoberflächen beschrieben, das im wesentlichen besteht aus Glykolen als Frostschutzmittel und Hauptbestandteil, gegebenenfalls gemeinsam mit Wasser; Gelatine, Leim, Seifen oder Naturgummi als Verdicker zur Steuerung der Viskosität; einer wasserunlöslichen Verbindung aus der Gruppe der Mineralöle, tierischen Öle, pflanzlichen Öle, synthetischen Öle und wasserunlöslichen Alkohole; und einem beliebigen nichtionogenen Tensid als Dispergiermittel für die Öle. Als Tenside werden unter anderen Verbindungen auch niedermolekulare aliphatische Alkohole, Sulfonsäuresalze und Petroleumsulfonate genannt.

Die aus der deutschen Auslegeschrift 19 01 061 bekannte Enteisungsflüssigkeit für Flugzeugoberflächen besteht im wesentlichen aus Polyalkoholen, Glykolen und Wasser als Hauptbestandteil; einem Homo- oder Copolymerisat einer ungesättigten Carbonsäure als Verdicker; einem speziellen Polyethylenglykol oder Polyethylen-Polypropylenglykol als nichtionogenes Tensid; und einer alkalischen Verbindung zur Neutralisation des Polymerisates. Es wird mehrfach hervorgehoben, dass der Verdicker eine Viskosität, gemessen in einer 1%igen wässrigen Lösung bei pH 7,5 bis 9,0 und 20°C, von höchstens 5000 mm²/s haben darf.

Bei der Weiterentwicklung der aus der US-Patentschrift 2 373 727 und deutschen Auslegeschrift 19 01 061 bekannten Mischungen wurde versucht, bessere Verdickungsmittel und vorteilhaftere Tenside einzusetzen. So wird in der deutschen Auslegeschrift 24 23 893, die aus der deutschen Auslegeschrift 19 01 061 bekannte Mischung dadurch zu verbessern versucht, dass als nichtionogene Tenside Polyoxethylate von Alkoholen, Fettsäuren, Fettsäureaminen und Fettsäureamiden, und wasserunlösliche Verbindungen aus der Gruppe der Fettalkohole, Alkylphenole, Alkylbenzole, Fettsäureester und Fettsäurealkanolamide eingesetzt werden. Als Verdicker werden die in der deutschen Auslegeschrift 19 01 061 beschriebenen Homo- und Copolymerisate von ungesättigten Carbonsäuren verwendet, wobei hervorgehoben wird, dass ihre Viskosität in einer 1%igen wässrigen Lösung bei pH 7,5 bis 9,0 und 20°C höchstens 5000 mm²/s betragen darf.

Neben den zwingend vorgeschriebenen nichtionogenen Tensiden werden in der deutschen Auslegeschrift 24 23 893 auch noch mehrere ionogene Tenside genannt, darunter auch Olefin-sulfonate und Alkylbenzolsulfonate. Diesen iono-genen Tensiden wird aber, ebenso wie in der genannten US-Patentschrift 2 373 727, bezüglich Art (Struktur) und einzusetzenden Menge offensichtlich keine grössere Bedeutung zugemessen. In der deutschen Auslegeschrift 24 23 893 wird auch von der Verwendung von Mineralölen bei der Formulierung von Enteisungsmitteln für Flugzeugoberflächen abgeraten.

Schliesslich ist aus der US-Patentschrift 3 940 356 ein flüssiges Enteisungsmittel für nicht horizontale Flächen bekannt. Es besteht im wesentlichen aus Glykolen und Wasser als Hauptbestandteil; einem Verdicker aus der Gruppe der vernetzten Polyacrylate; mindestens einem niedermolekularen aliphatischen Alkohol; und aus einer alkalischen Verbindung in einer solchen Menge, dass die Mischung neutral ist. Dieses Enteisungsmittel eignet sich offensichtlich insbesondere für die Enteisung von Windschutzscheiben von Automobilen.

Wie oben bereits ausgeführt wurde, lassen die bekannten Enteisungsflüssigkeiten hinsichtlich einiger wichtiger Eigenschaften noch zu wünschen übrig.

Aufgabe der Erfindung ist es daher, ein Entei-sungs- und Vereisungsschutzmittel, insbesonde-re für Flugzeuge zu finden, das die eingangs erwähnten Forderungen erfüllt, insbesondere auch bezüglich der wichtigen Eigenschaften, nämlich Scherstabilität, Viskosität, rheologischem Verhalten (das ist insbesondere das Viskositäts- und Fliessverhalten bei niedrigem und sehr hohem Schergefälle) und holdover-Zeit. Es soll auch antikorrosiv sein, vor allem gegenüber den obengenannten Werkstoffen.

Das erfindungsgemässe Enteisungs- und Vereisungsschutzmittel besteht im wesentlichen aus

a) 40 bis 65 Gew.-% von einem Glykol aus der Gruppe der Alkylenglykole mit 2 bis 3 Kohlenstoffatomen und Oxalkylenglykole mit 4 bis 6 Kohlenstoffatomen;

b) 35 bis 60 Gew.-% Wasser;

c) 0,05 bis 1,5 Gew.-% eines Verdickungsmittels aus der Gruppe der vernetzten Polyacrylate mit einer Viskosität von 1000 bis 50 000 mPa·s in einer 0,5 gew.-%igen wässrigen Lösung von 20°C und einem pH-Wert von 7,5 bis 10, und mit einem laminaren Strömungsverhalten in einer 0,1 bis 1,5 gew.-%igen wässrigen Lösung von +20°C, 0°C und −10°C und einem pH-Wert von 7,5 bis 10 bei einer Schergeschwindigkeit bis zu mindestens 20 000 s$^{-1}$;

d) 0,05 bis 1 Gew.-% einer wasserunlöslichen Komponente aus der Gruppe der gemischtbasischen Mineralöle;

e) 0,05 bis 1 Gew.-% eines Tensides aus der Gruppe der Alkali-Alkylarylsulfonate;

f) 0,01 bis 1 Gew.-% von mindestens einem Korrosionsinhibitor; und

g) einer solchen Menge von mindestens einer alkalischen Verbindung aus der Gruppe der Alka-licarbonate, Alkalihydrocarbonate, Alkalihydroxi-de und Amine, dass das Mittel einen pH-Wert von 7,5 bis 10 hat, wobei die Menge von den Komponenten a) und b) in dem Mittel mindestens 94 Gew.-%, bezogen auf das Gewicht des Mittels, beträgt.

Die Komponente a) des erfindungsgemässen Enteisungs- und Vereisungsschutzmittels ist vorzugsweise Ethylenglykol, Propylenglykol (1,2-Propylenglykol, 1,3-Propylenglykol) und/oder Diethylenglykol. Ihre Menge beträgt vorzugsweise 45 bis 60 Gew.-%, bezogen auf das Gewicht des Mittels (Gewicht der Flüssigkeit oder der Mischung, das heisst Gesamtmischung).

Die Menge der Komponente b) beträgt vorzugsweise 40 bis 55 Gew.-%, bezogen auf das Gewicht des Mittels. Das Wasser ist vorzugsweise ein (durch Behandlung mit Ionenaustauschern oder durch Destillation) entsalztes Wasser.

Die Komponente c) besteht aus vernetzten Polyacrylaten mit einer bestimmten Viskosität und einem speziellen Strömungsverhalten. Die erfindungsgemäss zu verwendenden Polyacrylate und ihre Herstellung sind in der US-Patentschrift 2 923 692 ausführlich beschrieben, die hiermit Teil dieses Beschreibungstextes sein soll.

Im Prinzip sind alle die in der US-Patentschrift 2 923 692 genannten vernetzten Polymeren ein-setzbar, sofern sie die erfindungsgemäss vorge-schriebenen Viskositäts- und Strömungseigen-schaften aufweisen. Der Begriff Polyacrylate umfasst im Rahmen der vorliegenden Erfindung vorzugsweise Homo- und Copolymerisate von Acryl-säure oder Methacrylsäure. Der Comonomeren-anteil im Copolymerisat kann im allgemeinen 2 bis 50 Gew.-%, vorzugsweise 5 bis 30 Gew.-%, bezogen auf das Copolymerisat, betragen. Von den Homo- und Copolymerisaten von Acrylsäure oder Methacrylsäure sind die Homopolymerisate bevorzugt. Die Homopolymerisate der Acrylsäure sind besonders bevorzugt.

Unter den in der US-Patentschrift 2 923 692 beschriebenen Vernetzern werden vorzugsweise Divinylbenzol, Diene, wie Butadien, oder Polyalkenyl-polyether von Polyhydroxyalkoholen mit mehr als einer, vorzugsweise zwei und mehr $CH_2 = C{<}$-Gruppen pro Molekül eingesetzt, weil sie zu besonders hochvernetzten Polymerisaten führen. Vorteilhafte Verbindungen aus der Gruppe der Polyalkenyl-polyether von Polyhydroxyalkoholen sind beispielsweise di-, tri-, tetra- und penta-Allylether von Erythrit, Xylit, Fruktose, Saccharose und Raffinose, Crotonylpolyether von Glucose, Raffinose und dergleichen, sowie gemischte Allyl- und Crotonylpolyether der genannten Polyalkohole (vgl. US-Patentschrift 2 923 692).

Die Viskosität der bei der vorliegenden Erfindung zu verwendenden vernetzten Polyacrylate wird zweckmässigerweise in einer 0,5 gew.-%igen wässrigen Lösung bei 20°C und pH 7,5 bis 10, vorzugsweise 8 bis 9,5, gemessen.

Die Viskosität soll vorzugsweise 5000 bis 30 000 mPa·s, insbesondere 10 000 bis 20 000 mPa·s, betragen.

Ein weiteres entscheidendes Kriterium für die erfindungsgemäss zu verwendenden Polyacrylate ist ihr Strömungsverhalten bei hohen Schergeschwindigkeiten. Hohe Schergeschwindigkeiten liegen bei Geschwindigkeitsgefällen ab etwa 500 s$^{-1}$ vor, sie umfassen in der Regel den Bereich 1000 bis 15 000 s$^{-1}$. Die erfindungsgemäss zu verwendenden vernetzten Polyacrylate sollen auch bei derart hohen Schergeschwindigkeiten eine laminare Strömung aufweisen.

Um das laminare Strömungsverhalten zu prüfen, wird zweckmässigerweise von einer 0,1 bis 1,5 gew.-%igen wässrigen Lösung des Polyacrylates von +20°C, 0°C und −10°C und dem pH-Wert von 7,5 bis 10, vorzugsweise von 8 bis 9,5, ausgegangen und der Viskositätsverlauf der Lösungen mit einem High-Shear-Rotationsviskosimeter gemessen, wobei die Schergeschwindigkeit von 0 s$^{-1}$ bis in den hohen Schergeschwindigkeitsbereich durchlaufen wird. Aus der erhaltenen Fliesskurve ist ersichtlich, ob laminare oder nichtlaminare Strömung vorliegt.

Die Menge an Komponente c) beträgt vorzugsweise 0,1 bis 1 Gew.-%, bezogen auf das Gewicht des Mittels.

Die Komponente d) des erfindungsgemässen Enteisungs- und Vereisungsschutzmittels ist ein gemischtbasisches Mineralöl. Es besteht vorzugsweise im wesentlichen aus 60 bis 70 Gew.-% Paraffinkohlenwasserstoffen und 30 bis 40 Gew.-% Naphthenen (Cycloparaffinen).

Die Anzahl der C-Atome der Paraffinkohlenwasserstoffe beträgt vorzugsweise 12 bis 18 (das ist eine mittlere Anzahl von etwa 15). Die Anzahl der C-Atome der Naphthene ist vorzugsweise 10 bis 20 (das ist eine mittlere Anzahl von etwa 15).

Die erfindungsgemäss einzusetzenden Mineralöle sind beispielsweise in Kirk-Othmer Encyclopedia of Chemical Technology, Second Edition, Vol. 15, Seiten 8 bis 10, Publisher: John Wiley and Sons Inc., New York, und in Ullmanns Enzyklopädie der technischen Chemie, 4. Auflage, Band 10 (aus dem Jahre 1975), Seiten 624 und 625, Verlag Chemie, Weinheim, Bundesrepublik Deutschland, beschrieben.

Die Menge der Komponente d) beträgt vorzugsweise 0,1 bis 0,5 Gew.-% bezogen auf das Gewicht des Mittels.

Die Komponente e) des erfindungsgemässen Enteisungs- und Vereisungsschutzmittels ist vorzugsweise ein Kalium- und/oder Natrium-Alkylarylsulfonat mit einer oder mehreren, vorzugsweise einer oder zwei Sulfonat-Gruppen (SO$_3$K- oder SO$_3$Na-Gruppen), einer oder mehreren, vorzugsweise einer oder zwei Alkylgruppen mit 5 bis 18, vorzugsweise 12 bis 18 C-Atomen, und einem oder mehreren, vorzugsweise einem oder zwei Benzolringen. Bevorzugt sind Kalium- und/oder Natrium-Alkylbenzolsulfonate mit 12 bis 18 C-Atomen in der Alkylgruppe (sie besitzen eine SO$_3$K- oder SO$_3$Na-Gruppe und eine Alkylgruppe).

Da bei der Herstellung von Alkylarylsulfonaten auch von Kohlenwasserstoffgemischen ausgegangen wird, wie sie beispielsweise bei der Erdölaufbereitung als Fraktionen anfallen, kann die Alkylgruppe auch derartige Gemische darstellen. Dabei beträgt die Anzahl der Kohlenstoffatome vorzugsweise 12 bis 18 (das ist eine mittlere Anzahl von 15).

Die als Komponente e) zu verwendenden Alkylarylsulfonate sind schon seit langem bekannt. Ihre Herstellung und ihre Eigenschaften sind beispielsweise in dem Lehrbuch über «Surface Active Agents and Detergents», Vol. II, 1958, Seiten 78 bis 87 und 93 bis 97, von Anthony M. Schwartz, James W. Perry and Julian Berch, Interscience Publishers, Inc., New York, London, beschrieben.

Die Menge der Komponente e) beträgt vorzugsweise 0,1 bis 0,7 Gew.-%, bezogen auf das Gewicht des Mittels.

Die Komponente f) besteht aus Korrosionsinhibitoren. Geeignete Korrosionsinhibitoren sind beispielsweise solche aus der Gruppe der anorganischen Alkalisalze, vorzugsweise die Kalium- oder Natriumsalze der Kohlensäure, der phosphorigen Säure, der Phosphorsäure und der Kieselsäure; Alkalisalze von Fettsäuren, vorzugsweise das Kalium- oder Natriumsalz der Laurinsäure, Palmitinsäure, Stearinsäure, Benzoesäure und Ölsäure; Mono- und Dialkylamine – gegebenenfalls alkoxyliert – und deren Salze mit Mineral- oder Fettsäure, vorzugsweise Butylamin, Hexylamin, Octylamin, Isononylamin, Oleylamin, Dipropylamin und Di-butylamin; Alkanolamine – gegebenenfalls alkoxyliert – und deren Salze mit Fettsäure, vorzugsweise die Mono-, Di- und Triethanolamine, Mono-, Di- und Tripropanolamine und Mono-, Di- und Triisopropanolamine; Ester der phosphorigen Säure oder der Phosphorsäure mit aliphatischen Alkoholen mit 1 bis 6 C-Atomen, vorzugsweise Ethylphosphate, Dimethylphosphat, Isopropylphosphat, Diisopropylphosphat, Butylphosphit und Dimethylphosphit; und Triazole, vorzugsweise Benztriazol und Tolyltriazol.

Vorzugsweise eingesetzte Korrosionsinhibitoren sind solche aus der Gruppe von Kalium- und Natriumsalzen der Kohlensäure, phosphorigen Säure, Phosphorsäure und Kieselsäure, Mono-, Di- und Triethanolaminen, Mono-, Di- und Tripropanolaminen, Mono-, Di und Triisopropanolaminen, und Benztriazol. Davon bevorzugt sind Kalium- oder Natriumsilicat, Triethanolamin und/oder Benztriazol.

Die Menge an der Komponente f) beträgt vorzugsweise 0,05 bis 0,5 Gew.-%, bezogen auf das Gewicht des Mittels.

Die Komponente g) des erfindungsgemässen Enteisungs- und Vereisungsschutzmittels ist vorzugsweise Ätzkali, und zwar in einer solchen Menge, dass das Mittel einen pH-Wert von vorzugsweise 8 bis 9,5 hat. Die Menge an der Komponente g) beträgt im allgemeinen 0,05 bis 1,5 Gew.-%, vorzugsweise 0,1 bis 0,5 Gew.-%, bezogen auf das Gewicht des Mittels.

Die Menge an den Komponenten a) und b) im erfindungsgemässen Mittel beträgt vorzugsweise 96 bis 99 Gew.-%, bezogen auf das Gewicht des Mittels.

Das erfindungsgemässe Enteisungs- und Vereisungsschutzmittel kann zusätzlich zu den Komponenten a) bis f) auch noch zweckmässige Additive, vorzugsweise Oxidationsstabilisatoren und Polysaccharide (gums) in wirksamen Mengen enthalten (gums sind zusätzliche Verdicker).

Als Oxidationsstabilisatoren eignen sich vorzugsweise Verbindungen mit Phenolcharakter, wie Dimethylkresol und Butylhydroxyanisol.

Es hat sich gezeigt, dass Polysaccharide die rheologischen Eigenschaften von vernetzten Polyacrylaten, insbesondere von solchen, deren Viskositätswerte im unteren Bereich der oben angegebenen Viskositätsgrenzen, das ist im Bereich von etwa 1000 bis 5000 mPa·s, liegen, vorteilhaft beeinflussen. Bevorzugte Polysaccharide sind solche vom Typ hochmolekularer Xanthan-Gummi (xanthan gum). Das Molekulargewicht ist in der Regel höher als 1 Million, vorzugsweise 2 bis 15 Millionen.

Die Menge an Oxidationsstabilisatoren beträgt im allgemeinen 0,01 bis 0,5 Gew.-%, vorzugsweise 0,03 bis 0,1 Gew.-%, bezogen auf das Gewicht des Mittels. Die Menge an Polysacchariden beträgt im allgemeinen 0,01 bis 0,5 Gew.-%, vorzugsweise 0,03 bis 0,1 Gew.-%, bezogen auf das Gewicht des Mittels.

Die Herstellung der erfindungsgemässen Enteisungs- und Vereisungsschutzmittels erfolgt im Prinzip durch Zusammenmischen der einzelnen Komponenten in beliebiger Reihenfolge. Dies kann beispielsweise in einem mit Rührer ausgestatteten Behälter, gegebenenfalls unter Erwärmen bis auf etwa 100°C, vorgenommen werden.

Nach einer vorteilhaften Herstellungsweise, mit der eine relativ rasche Auflösung der einzelnen Komponenten zu erreichen ist, wird wie folgt vorgegangen: In einem Behälter wird das Wasser (Komponente b) vorgelegt und unter Rühren das Polyacrylat (Komponente c) zugegeben (Raumtemperatur). Nach der Zugabe wird zweckmässigerweise für einige Zeit weitergerührt, beispielsweise für 30 Minuten bis 3 Stunden. Anschliessend wird unter Rühren das gemischtbasische Mineralöl (Komponente d), das Alkylarylsulfonat (Komponente e) und der Korrosionsinhibitor (Komponente f) dazugemischt und darauf das Glykol (Komponente a) eingebracht. Nun wird die alkalische Verbindung (Komponente g), zweckmässigerweise in Form einer beispielsweise 10%igen wässrigen Lösung, dazugegeben, so dass ein pH-Wert von 7,5 bis 10, vorzugsweise 8 bis 9,5 eingestellt wird.

Das erfindungsgemässe Enteisungs- und Vereisungsschutzmittel zeigt überraschend gute Eigenschaften, vor allem eine unerwartet lange holdover-Zeit. Es zeichnet sich ferner insbesondere durch eine optimale Viskosität, optimale rheologische Eigenschaften und eine ausreichend hohe Scherstabilität aus. Es besitzt auch eine relativ hohe Gefrierpunktdepression, eine gute Netzwirkung, eine nur geringe Hydrophilie, hohe Temperaturbeständigkeit, eine sehr lange Lagerungsmöglichkeit, auch bei hohen Temperaturen, und eine ausgezeichnete Antikorrosivität. Bei der Aufbringung auf Flugzeuge zeichnet es sioch ferner durch die überraschend gute Versprühbarkeit und die sehr günstigen Abgleiteigenschaften nach dem Start der Maschine aus.

Bei der Anwendung des erfindungsgemässen Enteisungs- und Vereisungsschutzmittels wird dieses zweckmässigerweise noch mit Wasser verdünnt, vorzugsweise im Verhältnis 80:20 oder 50:50.

In dieser verdünnten Form wird es mit den üblichen Geräten auf die zu behandelnden Flächen aufgesprüht. Bei der Flugzeugenteisung wird die verdünnte Lösung in der Regel vor dem Aufsprühen auf 50 bis 80°C erwärmt. Zur Konservierung der enteisten Flächen wird zweckmässigerweise das unverdünnte Produkt eingesetzt.

Die Erfindung wird nun anhand von Beispielen noch näher erläutert:

Beispiel 1

Es wird ein erfindungsgemässes Enteisungs- und Vereisungsschutzmittel aus den folgenden Komponenten (in Gew.-%) hergestellt:

45,00 Diethylenglykol
10,00 Propylenglykol
43,80 Wasser
0,27 vernetzte Polyacrylsäure; die Viskosität des Polymerisates in einer 0,5%igen wässrigen Lösung bei 20°C und pH 9 beträgt 16 000 mPa·s,
0,23 gemischtbasisches Mineralöl, bestehend im wesentlichen aus etwa 65 Gew.-% Paraffinkohlenwasserstoffen mit einer mittleren Anzahl von Kohlenstoffatomen von 15 und etwa 35 Gew.-% Naphthenen mit einer mittleren Anzahl von Kohlenstoffatomen von 15,
0,40 Natrium-Alkylbenzolsulfonat mit einer mittleren Anzahl von Kohlenstoffatomen in der Alkylgruppe von 15,
0,07 Korrosionsinhibitor
0,23 Ätzkali 85%ig.

In einem Behälter mit Rührer werden 16 l vollentsalztes Wasser vorgelegt und unter Rühren 108 g der Polyacrylsäure dazugegeben. Nach der Zugabe wird 2½ Stunden weitergerührt. Anschliessend werden 18 kg Diethylenglykol, 4 kg Propylenglykol, 92 g des gemischtbasischen Mineralöls, 160 g des Alkylbenzolsulfonats und 16 g Korrosionsinhibitor dazugemischt. Nun werden 95 g KOH (85%ig) in 1520 g vollentsalztem Wasser gelöst; diese Lösung wird in die Mischung eingerührt. Das hergestellte Enteisungs- und Vereisungsschutzmittel hat einen pH-Wert von 9,2.

Eigenschaften:

1. Die holdover-Zeit beträgt 9 Stunden.

2. Das Strömungsverhalten in einem Rotationsviskosimeter bei einer Schergeschwindigkeit im Bereich von 0 $s^{-1}$ bis 40 000 $s^{-1}$ ist laminar.

3. Ubbelohde-Viskosität

| | +20°C | 0°C (mm²/s) | –10°C |
|---|---|---|---|
| Konzentrat | 320 | 1000 | 2000 |
| Verdünnung mit Wasser 80:20 | 530 | 1300 | 2500 |
| Verdünnung mit Wasser 50:50 | 210 | 400 | 650 |

Beispiel 2

Es wird ein erfindungsgemässes Enteisungs- und Vereisungsschutzmittel aus den folgenden Komponenten (in Gew.-%) hergestellt:
48,00 Propylenglykol
50,60 Wasser
0,30 vernetzte Polyacrylsäure; die Viskosität des Polymerisates in einer 0,5%igen wässrigen Lösung bei 20°C und pH 9 beträgt 140 000 mPa·s,
0,29 gemischtbasisches Mineralöl, bestehend im wesentlichen aus etwa 70 Gew.-% Paraffinkohlenwasserstoffen mit einer mittleren Anzahl von Kohlenstoffatomen von 15 und etwa 30 Gew.-% Naphthenen mit einer mittleren Anzahl von Kohlenstoffatomen von 15
0,50 Natrium-Alkylbenzolsulfonat mit einer mittleren Anzahl von Kohlenstoffatomen in der Alkylgruppe von 15,
0,07 Korrosionsinhibitor
0,27 Ätzkali 85%ig.

In einem Behälter mit Rührer werden 1518 g vollentsalztes Wasser vorgelegt. Unter Rühren werden 8,1 g KOH 85%ig, 15 g des Alkylbenzolsulfonates, 8,7 g des gemischtbasischen Mineralöles, 1,5 g Korrosionsinhibitor und 700 g Propylenglykol dazugegeben. Anschliessend wird die Mischung auf 50 bis 60°C erhitzt, und es werden 9 g der Polyacrylsäure und weitere 740 g an Propylenglykol eingerührt. Hierauf wird die Mischung bei der genannten Temperatur etwa 6 Stunden weitergerührt.

Das hergestellte Enteisungs- und Vereisungsschutzmittel hat einen pH-Wert von 9,0.
Eigenschaften:

1. Die holdover-Zeit beträgt 5 Stunden.
2. Das Strömungsverhalten in einem Rotationsviskosimeter bei einer Schergeschwindigkeit im Bereich von 0 s⁻¹ bis 40 000 s⁻¹ ist laminar.
3. Ubbelohde-Viskosität

| | +20°C | 0°C (mm²/s) | –10°C |
|---|---|---|---|
| Konzentrat | 320 | 950 | 1900 |
| Verdünnung mit Wasser 80:20 | 450 | 1050 | 2200 |

| | +20°C | 0°C (mm²/s) | –10°C |
|---|---|---|---|
| Verdünnung mit Wasser 50:50 | 180 | 380 | 600 |

Beispiel 3

Es wird ein erfindungsgemässes Enteisungs- und Vereisungsschutzmittel aus den folgenden Komponenten (in Gew.-%) hergestellt:
45,00 Diethylenglykol
10,00 Propylenglykol
42,65 Wasser
0,70 vernetzte Polyacrylsäure; die Viskosität des Polymerisates in einer 0,5%igen wässrigen Lösung bei 20°C und pH 9 beträgt 3000 mPa·s,
0,15 gemischtbasisches Mineralöl gemäss Beispiel 1
0,25 Natrium-Alkylbenzolsulfonat gemäss Beispiel 1
0,90 Korrosionsinhibitor
0,30 Ätzkali 85%ig
0,05 Oxidationsstabilisator.

Die Mischung der Komponenten erfolgt in einem mit Rührer ausgestatteten Behälter (wobei die Komponenten in beliebiger Reihenfolge eingesetzt werden können). Das hergestellte Enteisungs- und Vereisungsschutzmittel hat einen pH-Wert von 9,5.

Eigenschaften:
1. Die holdover-Zeit beträgt 7 Stunden.
2. Das Strömungsverhalten entspricht dem in Beispiel 1.
3. Ubbelohde-Viskosität

| | +20°C | 0°C (mm²/s) | –10°C |
|---|---|---|---|
| Konzentrat | 380 | 970 | 1800 |
| Verdünnung mit Wasser 80:20 | 200 | 400 | 660 |
| Verdünnung mit Wasser 50:50 | 50 | 100 | 150 |

Beispiel 4

Es wird wie bei Beispiel 3 vorgegangen, wobei die folgenden Komponenten (in Gew.-%) eingesetzt werden:

48,00 Propylenglykol
50,51 Wasser
0,70 vernetztes Acrylsäure-Copolymerisat, dessen Viskosität in einer 0,5%igen wässrigen Lösung bei 20°C und pH 9 5000 mPa·s beträgt,
0,15 gemischtbasisches Mineralöl gemäss Beispiel 1

0,25 Natrium-Alkylbenzolsulfonat gemäss Beispiel 1
0,04 Korrosionsinhibitor
0,30 Ätzkali 85%ig
0,05 Oxidationsstabilisator.

Eigenschaften des Mittels:
1. Die holdover-Zeit beträgt 7 Stunden.
2. Das Strömungsverhalten entspricht dem in Beispiel 1.
3. Ubbelohde-Viskosität

|  | +20°C | 0°C (mm²/s) | –10°C |
|---|---|---|---|
| Konzentrat | 350 | 1000 | 1850 |
| Verdünnung mit Wasser 80:20 | 200 | 390 | 670 |
| Verdünnung mit Wasser 50:50 | 50 | 90 | 160 |

Beispiel 5
Es wird wie bei Beispiel 3 vorgegangen, wobei die folgenden Komponenten (in Gew.-%) eingesetzt werden:

45,00 Diethylenglykol
10,00 Propylenglykol
42,81 Wasser
0,83 vernetztes Acrylsäure-Copolymerisat, dessen Viskosität in einer 0,5%igen wässrigen Lösung bei 20°C und pH 9 1500 mPa·s beträgt,
0,15 gemischtbasisches Mineralöl gemäss Beispiel 1
0,25 Natrium-Alkylbenzolsulfonat gemäss Beispiel 1
0,62 Korrosionsinhibitor
0,24 Ätzkali 85%ig
0,05 Oxidationsstabilisator
0,05 Xanthan-Gummi

Eigenschaften der Mischung:
1. Die holdover-Zeit beträgt 6 Stunden.
2. Das Strömungsverhalten entspricht dem von Beispiel 1.
3. Ubbelohde-Viskosität

|  | +20°C | 0°C (mm²/s) | –10°C |
|---|---|---|---|
| Konzentrat | 360 | 1000 | 1800 |
| Verdünnung mit Wasser 80:20 | 180 | 450 | 650 |
| Verdünnung mit Wasser 50:50 | 60 | 90 | 160 |

Nach einer Alterung dieses Mittels durch Stehenlassen 4 Wochen lang bei 95°C in einem geschlossenen Gefäss zeigt die Viskosität die nachstehenden Werte

| Ubbelohde Viskosität | +20°C | 0°C (mm²/s) | –10°C |
|---|---|---|---|
| Konzentrat | 500 | 1300 | 2300 |
| Verdünnung mit Wasser 80:20 | 300 | 750 | 1600 |
| Verdünnung mit Wasser 50:50 | 90 | 160 | 500 |

Die holdover-Zeit der gealterten Mischung liegt bei 8 Stunden.

Messung der holdover-Zeit:
Die Messung der Zeit der Eisfreihaltung (holdover-Zeit) erfolgt mit Hilfe des nachstehend beschriebenen Gerätes und der nachstehend beschriebenen Methode:
Das Messgerät besteht aus einer 10 mm dikken, auf Hochglanz polierten Platte aus der Legierung AlCuMg, die gegenüber der Horizontalen in einem Neigungswinkel von 10° angeordnet und in vier voneinander getrennten Ablaufbahnen unterteilt ist. Unterhalb der Platte befindet sich ein kastenförmiger Behälter, der mit einer Kühlsole durchflossen wird, so dass die Temperatur der Platte auf –10°C gehalten wird. Die Temperatur der vier Ablaufbahnen kann mittels Widerstandsthermometer exakt gemessen werden. Entscheidend für reproduzierbare Messungen ist auch ein definiertes Umgebungsklima. Deshalb steht die gesamte Apparatur in einem Klimaraum der eine Temperatur von 20±1°C und eine relative Luftfeuchte von 60%±2% aufweist. Luftturbulenzen, die über der Prüffläche (obere Oberfläche der Platte) auftreten könnten, werden durch ein zugfrei belüftetes Kunststoffglasgehäuse ausgeschaltet.
Sobald das Gerät bereitsteht, das heisst, die Platte auf –10°C abgekühlt und trockengerieben worden ist, wird auf den Ablaufbahnen jeweils 50 ml Prüfflüssigkeit aufgegossen. Das Aufgiessen wird so durchgeführt, dass im oberen Teil der Ablaufbahn etwa 5% der Gesamtfläche der Ablaufbahn nicht mit Prüfflüssigkeit bedeckt werden und an der Aufgiessstelle eine etwa gerade und waagrechte Grenzlinie entsteht. 50 ml Prüfflüssigkeit sind, je nach Viskosität, in der Regel innerhalb von etwa 5 min aufgegossen. Eine Ablaufbahn ist, wiederum je nach Viskosität der Prüfflüssigkeit, in der Regel innerhalb von 5 bis 30 min vollständig mit Prüfflüssigkeit bedeckt. Die Eisfreihaltezeit (holdover-time) ist jene Zeit, die vergeht, bis auf einer mit Prüfflüssigkeit bedeckten Ablaufbahnfläche die Bildung von Eis festgestellt wird.
Die Viskosität des erfindungsgemässen Mittels wird in einem Ubbelohde-Viskosimeter nach DIN 51 562 gemessen (es werden, je nach Viskosität, Viskosimeter mit der Kapillarkonstanten 1 und dem Kapillarinnendurchmesser 2,01 mm, 3 und 2,65 mm oder 5 und 3,00 mm verwendet).

Die Viskosität der Polyacrylate (Komponente c) wird in einem Brookfield-Rotationsviskosimeter gemessen, bei einer Drehzahl von 20 Umdrehungen pro Minute (rpm). Es werden je nach Viskosität der zu prüfenden Lösung die Spindeln Nr. 4, 5 oder 6 eingesetzt.

Die Bestimmung des Strömungsverhaltens (Scherstabilität) des erfindungsgemässen Mittels und der Polyacrylate wird in einem High Shear-Rotationsviskosimeter durchgeführt, das Schergeschwindigkeiten bis zu 40 000 $s^{-1}$ zulässt (DIN 53 018 und DIN 53 019). Dabei wird die sogenannte Fliesskurve, beginnend mit 0 $s^{-1}$ bis zu einem Geschwindigkeitsgefälle von etwa 40 000 $s^{-1}$ aufgenommen.

**Patentansprüche**

1. Enteisungs- und Vereisungsschutzmittel, bestehend im wesentlichen aus

a) 40 bis 65 Gew.-% von einem Glykol aus der Gruppe der Alkylenglykole mit 2 bis 3 Kohlenstoffatomen und Oxalkylenglykole mit 4 bis 6 Kohlenstoffatomen;

b) 35 bis 60 Gew.-% Wasser;

c) 0,05 bis 1,5 Gew.-% eines Verdickungsmittels aus der Gruppe der vernetzten Polyacrylate mit einer Viskosität von 1000 bis 50 000 mPa·s in einer 0,5 gew.-%igen wässrigen Lösung von 20°C und einem pH-Wert von 7,5 bis 10 und mit einem laminaren Strömungsverhalten in einer 0,1 bis 1,5 gew.-%igen wässrigen Lösung von +20°C, 0°C und –10°C und einem pH-Wert von 7,5 bis 10 bei einer Schergeschwindigkeit bis zu mindestens 20 000 $s^{-1}$;

d) 0,05 bis 1 Gew.-% einer wasserunlöslichen Komponente aus der Gruppe der gemischtbasischen Mineralöle;

e) 0,05 bis 1 Gew.-% eines Tensides aus der Gruppe der Alkali-Alkylarylsulfonate;

f) 0,01 bis 1 Gew.-% von mindestens einem Korrosionsinhibitor; und

g) einer solchen Menge von mindestens einer alkalischen Verbindung aus der Gruppe der Alkalicarbonate, Alkalihydrocarbonate, Alkalihydroxide und Amine, dass das Mittel einen pH-Wert von 7,5 bis 10 hat, wobei die Menge von den Komponenten a) und b) in dem Mittel mindestens 94 Gew.-%, bezogen auf das Gewicht des Mittels, beträgt.

2. Mittel nach Anspruch 1, dadurch gekennzeichnet, dass die Komponente c) ein vernetztes Polyacrylat mit einer Viskosität von 1000 bis 50 000 mPa·s in einer 0,5 gew.-%igen wässrigen Lösung von 20°C und einem pH-Wert von 8 bis 9,5 und mit einem laminaren Strömungsverhalten in einer 0,1 bis 1,5 gew.-%igen wässrigen Lösung von +20°C, 0°C und –10°C und einem pH-Wert von 8 bis 9,5 bei einer Schergeschwindigkeit bis zu mindestens 20 000 $s^{-1}$ ist.

3. Mittel nach Anspruch 2, dadurch gekennzeichnet, dass die Komponente

a) ein Glykol aus der Gruppe von Ethylenglykol, Propylenglykol und Diethylenglykol;

c) ein Polyacrylat mit einer Viskosität von 5000 bis 30 000 mPa·s,

d) ein gemischtbasisches Mineralöl, das im wesentlichen aus 60 bis 70 Gew.-% Paraffinkohlenwasserstoffen mit 12 bis 18 Kohlenstoffatomen und 30 bis 40 Gew.-% Naphthenen mit 10 bis 20 Kohlenstoffatomen besteht;

e) ein Alkali-Alkylarylsulfonat aus der Gruppe von Kalium-Alkylarylsulfonaten und Natrium-Alkylarylsulfonaten mit einer oder zwei Sulfonatgruppen, einer oder zwei Alkylgruppen mit 12 bis 18 Kohlenstoffatomen und einem oder zwei Benzolringen;

f) ein Korrosionsinhibitor aus der Gruppe von Kaliumsalzen und Natriumsalzen der Kohlensäure, phosphorigen Säure, Phosphorsäure und Kieselsäure, Mono-, Di- und Triethanolaminen, Mono-, Di- und Tripropanolaminen, Mono-, Di- und Triisopropanolaminen, und Benztriazol; und die Komponente

g) Ätzkali ist, in einer solchen Menge, dass das Mittel einen pH-Wert von 8 bis 9,5 hat.

4. Mittel nach Anspruch 3, dadurch gekennzeichnet, dass die Komponente

c) ein Polyacrylat mit einer Viskosität von 10 000 bis 20 000 mPa·s,

e) ein Alkylbenzolsulfonat aus der Gruppe von Kalium-Alkylbenzolsulfonaten und Natrium-Alkylbenzolsulfonaten mit 12 bis 18 C-Atomen in der Alkylgruppe; und die Komponente

f) ein Korrosionsinhibitor aus der Gruppe von Kaliumsilicat, Natriumsilicat, Triethanolamin und Benztriazol ist.

5. Mittel nach einem der Ansprüche 1 bis 4, dadurch gekennzeichnet, dass die Komponente c) ein Polyacrylat aus der Gruppe von Homo- und Copolymerisaten von Acrylsäure oder Methacrylsäure ist.

6. Mittel nach einem der Ansprüche 1 bis 4, dadurch gekennzeichnet, dass die Komponente c) ein Homopolymerisat von Acrylsäure oder Methacrylsäure ist.

7. Mittel nach einem der Ansprüche 1 bis 4, dadurch gekennzeichnet, dass die Komponente c) ein Homopolymerisat der Acrylsäure ist.

8. Mittel nach Anspruch 1, dadurch gekennzeichnet, dass die Komponenten in den folgenden Mengen vorliegen

a) 45 bis 60 Gew.-%

b) 40 bis 55 Gew.-%

c) 0,1 bis 1 Gew.-%

d) 0,1 bis 0,5 Gew.-%

e) 0,1 bis 0,7 Gew.-%

f) 0,05 bis 0,5 Gew.-% und

g) 0,1 bis 0,5 Gew.-%, wobei die Menge von den Komponenten a) und b) im Mittel 96 bis 99 Gew.-%, bezogen auf das Gewicht des Mittels, beträgt.

9. Mittel nach Anspruch 1, dadurch gekennzeichnet, dass es zusätzlich

h) 0,01 bis 0,5 Gew.-% von mindestens einem Oxidationsstabilisator, und im Falle eines vernetzten Polyacrylates mit einer Viskosität von etwa 1000 bis 5000 mPa·s,
i) 0,01 bis 0,5 Gew.-% von hochmolekularem Xanthangummi als weiteren Verdicker enthält.

10. Mittel nach Anspruch 9, dadurch gekennzeichnet, dass es die Komponenten h) und i) jeweils in einer Menge von 0,03 bis 0,1 Gew.-% enthält.

## Revendications

1. Produit dégivrant et inhibiteur de givrage, caractérisé en ce qu'il consiste essentiellement en:

a) 40 à 65% en poids d'un glycol choisi dans l'ensemble formé par les alkylène-glycols ayant 2 à 3 atomes de carbone et les oxyalkylène-glycols comportant 4 à 6 atomes de carbone;
b) 35 à 60% en poids d'eau;
c) 0,05 à 1,5% en poids d'une épaississant choisi dans l'ensemble formé par les polyacrylates réticulés ayant une viscosité de 1000 à 50 000 mPa·s dans le cas d'une solution aqueuse à 0,5% en poids à 20°C et à un pH de 7,5 à 10 et présentant un comportement d'écoulement du type laminaire dans le cas d'une solution aqueuse à 0,1 à 1,5% en poids à +20°C, 0°C et –10°C à un pH de 7,5 à 10 pour un gradient de cisaillement allant jusqu'à 20 000 s⁻¹ au moins;
d) 0,05 à 1% en poids d'un constituant insoluble dans l'eau, choisi dans l'ensemble des huiles minérales à base mixte;
e) 0,05 à 1% en poids d'un tensio-actif choisi dans l'ensemble formé par les alkylarylsulfonates alcalins;
f) 0,01 à 1% en poids d'au moins un inhibiteur de corrosion; et
g) une quantité d'au moins un composé alcalin choisi dans l'ensemble formé par les carbonates alcalins, les hydrogénocarbonates alcalins, les hydroxydes alcalins et les amines, telle que le produit possède un pH de 7,5 à 10, la quantité des constituants a) et b) représentant dans le produit au moins 94% en poids, par rapport au poids du produit.

2. Produit selon la revendication 1, caractérisé on ce que le constituent c) est un polyacrylate réticulé ayant une viscosité de 1000 à 50 000 mPa·s dans le cas d'une solution aqueuse à 0,5% en poids à 20°C et à un pH de 8 à 9,5, et ayant un comportement d'écoulement du type laminaire dans le cas d'une solution aqueuse à 0,1 à 1,5% en poids à +20°C, 0°C et –10°C et à un pH de 8 à 9,5 à un gradient de cisaillement allant jusqu'à 20 000 s⁻¹ au moins.

3. Produit selon la revendication 2, caractérisé en ce que le constituant

a) est un glycol choisi dans l'ensemble formé par l'éthylène-glycol, le propylène-glycol et le diéthylène-glycol;
c) est un polyacrylate dont la viscosité se situe entre 5000 et 30 000 mPa·s;
d) est une huile minérale à base mixte, qui consiste essentiellement en 60 à 70% en poids d'hydrocarbures paraffiniques ayant 12 à 18 atomes de carbone et en 30 à 40% en poids de naphtènes ayant 10 à 20 atomes de carbone;
e) est un alkylarylsulfonate alcalin choisi dans l'ensemble formé par les alkylarylsulfonates de potassium et les alkylarylsulfonates de sodium comportant un ou deux groupes sulfonates, un ou deux groupes alkyles ayant 12 à 18 atomes de carbone et un ou deux noyaux benzéniques;
f) est un inhibiteur de corrosion choisi dans l'ensemble formé par les sels de potassium et les sels de sodium de l'acide carbonique de l'acide phosphoreux, de l'acide phosphorique et de l'acide silicique, les mono-, di- et tri-éthanolamines, les mono-, di- et tri-propanolamines, les mono-, di- et tri-isopropanolamines et le benzotriazole; et le constituant
g) est de l'alcali caustique, présent en une quantité telle que le produit a un pH de 8 à 9,5.

4. Produit selon la revendication 3, caractérisé en ce que le constituant

c) est un polyacrylate dont la viscosité se situe de 10 000 à 20 000 mPa·s,
e) est un alkylbenzènesulfonate choisi dans l'ensemble formé par les alkylbenzènesulfonates de potassium et les alkylbenzènesulfonates de sodium ayant 12 à 18 atomes de carbone dans le groupe alkyle; et le constituant
f) est un inhibiteur de corrosion choisi dans l'ensemble formé par le silicate de potassium, le silicate de sodium, la triéthanolamine et le benzotriazole.

5. Produit selon l'une des revendications 1 à 4, caractérisé en ce que le constituant c) est un polyacrylate choisi dans l'ensemble formé par les homo- et les co-polymères de l'acide acrylique ou de l'acide méthacrylique.

6. Produit selon l'une des revendications 1 à 4, caractérisé en ce que le constituant c) est un homopolymère de l'acide acrylique ou de l'acide méthacrylique.

7. Produit selon l'une des revendications 1 à 4, caractérisé en ce que le constituant c) est un homopolymère de l'acide acrylique.

8. Produit selon la revendication 1, caractérisé en ce que les constituants y sont présents en les quantités suivantes:

a) 45 à 60% en poids,
b) 40 à 55% en poids,

c) 0,1 à 1% en poids,
d) 0,1 à 0,5% en poids,
e) 0,1 à 0,7% en poids,
f) 0,05 à 0,5% en poids, et
g) 0,1 à 0,5% en poids,

la quantité des constituants a) et b) représentant dans le produit 96 à 99% en poids, par rapport au poids du produit.

9. Produit selon la revendication 1, caractérisé en ce qu'il contient en outre

h) 0,01 à 0,5% en poids d'au moins un stabilisant à l'égard de l'oxydation, et, en cas d'un polyacrylate réticulé ayant une viscosité d'environ 1000 à environ 5000 mPa·s,
i) 0,01 à 0,5% en poids de gomme xanthane à poids moléculaire élevé, à titre d'épaississant supplémentaire.

10. Produit selon la revendication 9, caractérisé en ce qu'il contient les constituants h) et i) chacun en une quantité de 0,03 à 0,1% en poids.

## Claims

1. Agent for de-icing and protecting against icing-up, consisting essentially of a) 40 to 65% by weight of a glycol belonging to the group comprising alkylene glycols having 2 to 3 carbon atoms and oxalkylene glycols having 4 to 6 carbon atoms; b) 35 to 60% by weight of water; c) 0.05 to 1.5% by weight of a thickener belonging to the group comprising cross-linked polyacrylates having a viscosity of 1,000 to 50,000 mPa·s in a 0.5% strength by weight aqueous solution at 20°C and a pH value of 7.5 to 10, and having a laminar flow behavior in a 0.1 to 1.5% strength by weight aqueous solution at +20°C, 0°C and –10°C and a pH value of 7.5 to 10, at a shear rate of up to at least 20,000 seconds⁻¹; d) 0.05 to 1% by weight of a water-insoluble component belonging to the group comprising mixed-base mineral oils; e) 0.05 to 1% by weight of a surface-active agent belonging to the group comprising alkali metal alkylarylsulfonates; f) 0.01 to 1% by weight of at least one corrosion inhibitor; and g) a quantity of at least one alkaline compound belonging to the group comprising alkali metal carbonates, bicarbonates or hydroxides and amines, such that the agent has a pH value of 7.5 to 10, the quantity of the components a) and b) in the agent being at least 94% by weight, relative to the weight of the agent.

2. Agent as claimed in claim 1, wherein the component c) is a crosslinked polyacrylate which has a viscosity of 1,000 to 50,000 mPa·s in a 0.5% strength by weight aqueous solution at 20°C and a pH value of 8 to 9.5, and which has a laminar flow behavior in a 0.1 to 1.5% strength by weight aqueous solution at +20°C, 0°C and –10°C and at a pH value of 8 to 9.5, at a shear rate of up to at least 20,000 seconds⁻¹.

3. Agent as claimed in claim 2, wherein the component a) is a glycol belonging to the group comprising ethylene glycol, propylene glycol and diethylene glycol; the component c) is a polyacrylate having a viscosity of 5,000 to 30,000 mPa·s, the component d) is a mixed-base mineral oil composed essentially of 60 to 70% by weight of paraffin hydrocarbons having 12 to 18 carbon atoms and of 30 to 40% by weight of naphthenes having 10 to 20 carbon atoms; the component e) is an alkali metal alkylarylsulfoante belonging to the group comprising potassium alkylarylsulfonates and sodium alkylarylsulfonates having one or two sulfonate groups, one or two alkyl groups of 12 to 18 carbon atoms and one or two benzene rings; the component f) is a corrosion inhibitor belonging to the group comprising potassium salts and sodium salts of carbonic acid, phosphorus acid, phosphoric acid and silicic acid, mono-, di- and tri-ethanol-amines, mono-, di- and tri-propanolamines, mono-, di- and tri-isopropanolamines and benztriazole; and the component g) is potassium hydroxide, in a quantity such that the agent has a pH value of 8 to 9.5.

4. Agent as claimed in claim 3, wherein the component c) is a polyacrylate having a viscosity of 10,000 to 20,000 mPa·s, the component e) is an alkylbenzenesulfonate belonging to the group comprising potassium alkylbenzenesulfonates and sodium alkylbenzenesulfonates having 12 to 18 C atoms in the alkyl group; and the component f) is a corrosion inhibitor belonging to the group comprising potassium silicate, sodium silicate, triethanolamine and benztriazole.

5. Agent as claimed in any one of claims 1 to 4, wherein the component c) is a polyacrylate belonging to the group comprising homopolymers and copolymers of acrylic acid or methacrylic acid.

6. Agent as claimed in any one of claims 1 to 4, wherein the component c) is a homopolymer of acrylic acid or methacrylic acid.

7. Agent as claimed in any one of claims 1 to 4, wherein the component c) is a homopolymer of acrylic acid.

8. Agents as claimed in claim 1, wherein the components are present in the followimg quantities:

a) 45 to 60% by weight
b) 40 to 55% by weight
c) 0.1 to 1% by weight
d) 0.1 to 0.5% by weight
e) 0.1 to 0.7% by weight
f) 0.05 to 0.5% by weight and
g) 0.1 to 0.5% by weight, the quantity of the components a) and b) in the agent being 96 to 99% by weight, relative to the weight of the agent.

9. Agent as claimed in claim 1, which additionally contains: h) 0.01 to 0.5% by weight of at least one anti-oxidant and, in the case of a crosslinked polyacrylate having a viscosity of about 1,000 to 5,000 mPa·s, i) 0.01 to 0.5% by weight of a high-molecular xanthan gum as a further thickener.

10. Agent as claimed in claim 9, which contains each of the components h) and i) in a quantity of 0.03 to 1% by weight.